Europäisches Patentamt

European Patent Office

Office européen des brevets

(11) Veröffentlichungsnummer: **0 451 691 A2**

(12) **EUROPÄISCHE PATENTANMELDUNG**

(21) Anmeldenummer: **91105290.0**

(22) Anmeldetag: **03.04.91**

(51) Int. Cl.5: **B60R 9/06**

---

(30) Priorität: **07.04.90 DE 4011315**

(43) Veröffentlichungstag der Anmeldung:
**16.10.91 Patentblatt 91/42**

(84) Benannte Vertragsstaaten:
**AT BE CH DE DK ES FR GB IT LI NL SE**

(71) Anmelder: **Harder, Johann, Dipl.Ing.(FH)**
**Grüntenweg 3**

**W-8951 Mauerstetten(DE)**

(72) Erfinder: **Harder, Johann, Dipl.Ing.(FH)**
**Grüntenweg 3**
**W-8951 Mauerstetten(DE)**

(74) Vertreter: **Witte, Alexander, Dr.-Ing. et al**
**Augustenstrasse 7**
**W-7000 Stuttgart 1(DE)**

---

(54) **Haltevorrichtung für Fahrzeug-Hecklasten.**

㊐ Um die Heckklappe (12) eines Fahrzeugs (10) auch dann öffnen zu können, wenn am Fahrzeugheck ein mit Lasten, z.B. Fahrrädern bestückter Lastträgerrahmen (16) angeordnet ist, wird letzterer um ein seitliches Schwenklager (52, 54) an einem Zusatzrahmen (18) schwenkbar gelagert, der seinerseits am Fahrzeug befestigt ist und so konturiert ist, daß die Öffnung der Heckklappe nicht behindert wird.

FIG.1

Die Erfindung betrifft einen Lastträger zur Befestigung am Heck eines Fahrzeugs mit den Merkmalen des Oberbegriffes von Patentanspruch 1.

Die US-A-3,695,469 zeigt einen derartigen Lastträger für Motorräder. Die Schwenklageranordnung umfaßt ein Winkel-stück, das den Lastträgerrahmen untergreift und an diesem befestigt ist. Die Arretieranordnung am anderen Ende des Lastträgerrahmens besteht aus einer geraden Schiene, die rechtwinklig am Lastträgerrahmen befestigt ist und beim Einschwenken des Lastträgerrahmens in die entsprechende Stütze einfährt und mittels eines Steckbolzens gesichert werden kann. Der Lastträgerrahmen ist weiterhin um das Schwenklagerende um eine horizontale Achse nach unten schwenkbar. Nachteilig ist, daß der Schwenkbereich begrenzt ist, sodaß die Last erst vom Lastträger entfernt werden muß, um eine Hecktür oder eine Heckklappe des Fahrzeugs öffnen zu können. Der Lastträger läßt sich zwar mit einem zusätzlichen spiegelbildlichen Winkelstück auch so zusammenbauen, daß die Schwenklageranordnung und die Arretieranordnung seitenmäßig ver - tauscht werden, jedoch bleibt als Nachteil, daß das Verschwenken immer nur um eine Achse erfolgen kann. Soll der Lastträgerrahmen um eine an der gegenüberliegenden Seite liegende Achse verschwenkt werden, muß erst ein völliger Umbau des Lastträgers erfolgen.

Die US-A-3,760,965 zeigt ebenfalls einen gattungsgemäßen Lastträger zur Aufnahme eines Motorrades. Auch hier ist der Lastträger um eine Schwenklageranordnung wegschwenkbar, um an die Hecktür des Fahrzeugs heranzukommen. Es ist aber nur ein Wegschwenken nach einer Seite hin möglich. Für Motorradträger fällt dieser Nachteil nicht sehr ins Gewicht. Bei Lastträgern mit größerer Tiefe, z.B. zur Aufnahme von mehreren Fahrrädern ist dies aber sehr wohl der Fall, weil in der um 90° ausgeschwenkten Stellung der Lastträger dann über die Breite des Fahrzeugs hinausragt. Wenn, wie in diesem Dokument gezeigt, das Schwenklager auf der Backbordseite des Fahrzeugs angebracht ist, müßte das Fahrzeug auf einer Straße links geparkt werden, damit der abgeschwenkte Lastträger nicht in die Fahrbahn ragt.

Die US-A-3,586,188 zeigt einen ähnlichen Lastträger, der ebenfalls auf der Backbordseite eine Schwenkanordnung und auf der Steuerbordseite eine Arretieranordnung aufweist. Die Nachteile sind dieselben wie beim vorbeschriebenen Stand der Technik.

Aufgabe der Erfindung ist es, einen Hecklastträger zu schaffen, der die Nachteile des Standes der Technik vermeidet und insbesondere so ausgebildet ist, daß er ohne Umbauten sowohl um ein backbordseitiges Schwenklager, als auch um ein steuerbordseitiges Schwenklager verschwenkt werden kann.

Diese Aufgabe wird bei einem Lastträger mit den Merkmalen des Oberbegriffes von Patentanspruch 1 durch dessen Kennzeichnungsmerkmale gelöst.

Da die Arretieranordnung erfindungsgemäß genauso ausgebildet ist wie die Schwenklageranordnung, bildet sie selbst ein Schwenklager, sodaß der Lastträger sowohl um eine backbordseitige vertikale Schwenkachse als auch um eine steuerbordseitige Schwenkachse verschwenkt werden kann. Da die beiden Schwenklager an den beiden seitlichen Enden des Lastträgerrahmens angeordnet sind, ist ein Verschwenken mindestens um 90°, vorzugsweise aber auch bis zu 270° möglich, sodaß der Lastträger aus dem Heckbereich des Fahrzeuges herausgeschwenkt werden kann. Dies ist z.B. vorteilhaft bei einem Fahrzeug mit Hecksitzgruppe, um die Sicht nach hinten nicht zu behindern.

Eine besonders einfache Ausführungsform der Erfindung verwendet zwei übereinanderliegende backbordseitige Schwenklager und zwei spiegelbildlich angeordnete ebenfalls vertikal ausgefluchtete steuerbordseitige Schwenklager. Jedes Schwenklager kann mittels eines separaten herausziehbaren Schwenkbolzens entriegelt werden. Zieht man die beiden backbordseitigen Bolzen, so ist der Lastträgerrahmen um die steuerbordseitige Schwenklageranordnung verschwenkbar und umgekehrt. Zieht man alle vier Bolzen, kann der Lastträgerrahmen vom Fahrzeug abgenommen werden. Anstelle von zwei separaten Steckbolzen kann auch eine durchgehende Steckstange verwendet werden.

Obwohl die Stützen einzeln am Fahrzeug befestigt werden können, bestehen Ausgestaltungen der Erfindung darin, die backbordseitigen Stützen und die steuerbordseitigen Stützen an einer Verbindungsstange zu befestigen, sodaß der Vertikalabstand der Stützen unveränderbar festliegt. Auch können die Verbindungsstangen durch eine Querstrebe zu einem U-förmigen Rahmen verbunden werden, um die Stabilität zu erhöhen.

Weitere Ausgestaltungen der Erfindung bilden die Gegenstände der Unteransprüche.

Anhand der Zeichnung, die ein Ausführungsbeispiel darstellt, wird die Erfindung nachstehend näher beschrieben.

Es zeigt

FIG. 1 eine perspektivische Rückseitenansicht eines Fahrzeugs mit heckseitigem Lastträger, der hier in ausgeschwenkter Stellung dargestellt ist.

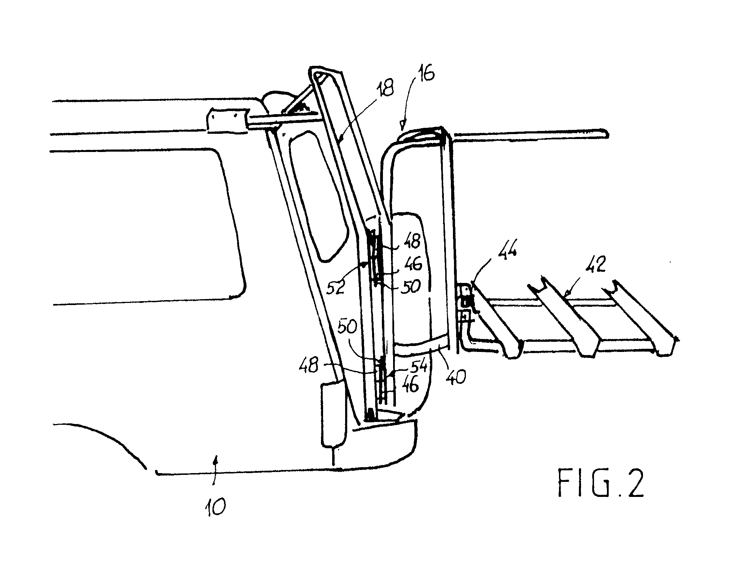

FIG. 2 eine Seitenansicht des am Fahrzeug angebrachten Lastträgers in Fahrstellung und

FIG. 3 eine Schnittansicht auf eine Schwenklageranordnung des Lastträgerrahmens, die ein Verschwenken des Lastträgerrahmens um etwa 270° erlaubt, sodaß er bei abgestelltem Fahrzeug und hochgeklapptem Boden ein Heranschwenken an die Fahrzeugseitenwand erlaubt.

An einem Fahrzeug 10, das mit einer Hecktür 12 versehen ist, ist heckseitig ein Lastträger 14 lösbar befestigt, der aus einem Lastträgerrahmen 16 und einem Zusatzrahmen 18 besteht. Letzterer hat zwei entsprechend der Heckkontur abgewinkelte Verbindungsstangen 20, deren untere Enden auf Bolzen 22 aufgesteckt sind, die ihrerseits an Platten 24 angeschweißt sind, welche auf der Heckstoßstange 26 festgeschraubt sind. Die beiden Verbindungsstangen 20 sind mittels eines oberen Querrohres 28 zu einem U-Rahmen miteinander verbunden. Das Querrohr 28 ist zweiteilig. Jeder Verbindungsstange 20 ist ein Querrohrteil zugeordnet und die beiden Querrohrteile sind teleskopierbar und mittels Schraube 30 festklemmbar. Von jeder Verbindungsstange 20 erstreckt sich eine Befestigungsstange 32 nach vorn, die in einen Klemmbeschlag 34 eingreift, der an der Regenrinne des Fahrzeuges festgeklemmt ist und gleichzeitig die Befestigungsstange 32 an der Regenrinne festhält.

Der Lastträgerrahmen 16 weist zwei Seitenholme 36 auf, die durch Querholme miteinander verbunden sind. Der Querholm 40 ist hier in Form eines U-Bügels ausgebildet, um das Reserverad umgreifen zu können. Ein Stützboden 42 des Lastträgerrahmens 16 erstreckt sich vom Lastträgerrahmen nach hinten und ist hier als Fahrradträger ausgebildet. Der Stützboden 42 ist um eine Querachse 44 in eine Außerfunktionsstellung nach oben schwenkbar und wird in geeigneter Weise dort gehalten.

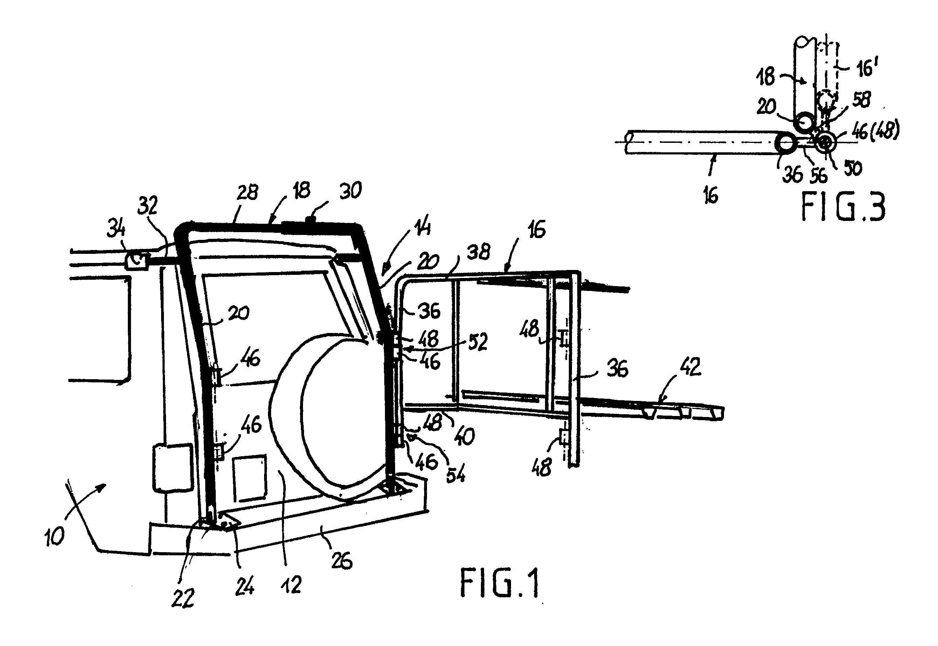

Die unteren vertikalen Abschnitte der Verbindungsstangen 20 weisen je zwei hinten angesetzte Rohrstücke 46 auf. Die beiden Seitenholme 36 des Lastträgerrahmens 16 haben vorn angeschweißte Rohrstücke 48. Alle Rohrstücke 46, 48 haben denselben Durchmesser und die Rohrstücke 46 des Zusatzrahmens 18 und die Rohrstücke 48 des Lastträgerrahmens 16 haben je den gleichen lichten Abstand. Wenn die vier rechtsseitigen Rohrstücke 46, 48 vertikal ausgefluchtet sind, wobei die Rohrstücke 48 des Lastträgerrahmens 16 auf den Rohrstücken 46 des Zusatzrahmens 18 abgestützt sind, können je zwei Rohrstücke 46, 48 durch einen Lagerbolzen 50 miteinander verbunden werden, sodaß ein oberes und ein unteres Schwenklager 52, 54 mit vertikaler Schwenkachse gebildet wird. Der Lastträgerrahmen 16 ist damit am Zusatzrahmen 18 schwenkbar gelagert. In der in FIG. 1 gezeigten ausgeschwenkten Stellung liegt die Heckklappe 12 frei und kann unbehindert geöffnet werden. Für die Fahrstellung wird der Lastträgerrahmen 16 an das Fahrzeugheck herangeschwenkt, bis die linksseitigen Rohrstücke 48 mit den Rohrstücken 46 der linken Verbindungsstange 20 fluchten, wonach auch hier jedes Rohrstückpaar 46,48 mittels eines nicht dargestellten Bolzens verbunden wird. Die Bolzen werden mittels Splinten gesichert.

Es versteht sich, daß statt zweier einzelner Lager-bzw. Arretierbolzen 50 auch eine durchgehende Lagerstange verwendet werden kann. Dem Benutzer steht es frei, zum Verschwenken des Lastträgerrahmens 16 die backbordseitigen oder steuebordseitigen Bolzen 50 zu entfernen, sodaß der Lastträgerrahmen 16 sowohl um die rechte Seite als auch um die linke Seite des Fahrzeugs ausgeschwenkt werden kann.

FIG. 3 erläutert eine Abwandlung insofern, als die Rohrstücke 46, 48 über Stege 56 bzw. 58 mit den Seitenholmen 36 bzw. den Verbindungsstangen 20 verbunden sind, wobei die, durch den Lagerbolzen 50 definierte Schwenkachse über die Seitenfläche des Fahrzeugs geringfügig nach außen versetzt ist. Der Lastträgerrahmen 16 kann damit um 270° bis an die äußere Seitenfläche des Fahrzeugs herangeschwenkt werden, wobei es natürlich im Falle eines nach hinten stehenden Bodens 42 nötig ist, diesen in die Ebene des Lastträgerrahmens 16 nach oben zu klappen. Diese Stellung ist in FIG. 3 mit 16' veranschaulicht.

**Patentansprüche**

1. Lastträger zur Befestigung am Heck eines Fahrzeugs, mit einem Lastträgerrahmen (16), der in der linken und in der rechten Hälfte vorspringende Aufhängungen (48) aufweist, denen am Fahrzeugheckbereich befestigte oder befestigbare linke und rechte Stützen (46) zugeordnet sind, die identisch ausgebildet sind, wobei die Stützen (46) und die Aufhängungen (48) Löcher aufweisen, die paarweise miteinander etwa vertikal ausgefluchtet und jeweils durch einen Steckbolzen (50) miteinander zu einer Schwenklageranordnung (52, 54) auf einer Seite und einer Arretieranordnung auf der anderen Seite verbunden sind, dadurch gekennzeichnet, daß die Aufhängungen (48) an den Seitenenden des Längsträgerrahmens (16) angeordnet sind, daß an jedem Seitenende eine obere und eine untere Aufhängung (48) mit vertikal ausgefluchteten Löchern vorgesehen ist, denen jeweils eine obere und eine untere Stütze (46) ebenfalls mit vertikal ausgefluchteten Löchern zugeordnet ist, wobei ggf. die obere und die untere Aufhängung (48) oder die obere und die untere Stütze (46) an einem einstückigen Rohr ausgebildet sind, und daß die Arretieranordnung ebenfalls ein Schwenklager bildet und prinzipiell gleich der Schwenklageranordnung (52, 54) ausgebildet und spiegelbildlich dazu angeordnet ist, sodaß der Lastträgerrahmen (16) wahlweise um eine der beiden seitlichen Schwenklager verschwenkbar ist.

2. Lastträger nach Anspruch 1, dadurch gekennzeichnet, daß die Aufhängungen (48) und Stützen (46) jeweils aus Rohrstücken gleichen Durchmessers bestehen.

3. Lastträger nach Anspruch 1 oder 2, dadurch gekennzeichnet, daß die obere und die untere Stütze (46) an jeder Fahrzeugseite durch eine Verbindungsstange (20) zu einer Befestigungseinheit miteinander verbunden sind.

4. Lastträger nach Anspruch 3, dadurch gekennzeichnet, daß die beiden Verbindungsstangen (20) durch eine Querstrebe (28) zu einem starren U-Rahmen miteinander verbunden sind.

5. Lastträger nach einem der Ansprüche 1 bis 4, dadurch gekennzeichnet, daß die beiden Verbindungsstangen (20) Bestandteile eines Planentragegerüstes sind oder an diesem und/oder einem Überrollbügel befestigt sind.

6. Lastträger nach einem der Ansprüche 1 bis 5, dadurch gekennzeichnet, daß die Verbindungsstangen (20) je bodenseitig auf einem, mit einem hochstehenden Bolzen (22) versehenen Beschlag (24) der Heckstoßstange (26) verankert sind.

7. Lastträger nach einem der Ansprüche 1 bis 6, dadurch gekennzeichnet, daß die Verbindungsstangen (20) an ihrem oberen Bereich je eine angenähert rechtwinklig angesetzte und in der Betriebsstellung etwa in Fahrtrichtung nach vorn weisende Befestigungsstange (32) aufweisen, die in einem Beschlag (34) an der Seitenfläche des Fahrzeugs lösbar gehaltert ist.

8. Lastträger nach Anspruch 7, dadurch gekennzeichnet, daß der Beschlag (34) an einer seitlichen Regenrinne des Fahrzeugs festgeklemmt oder festklemmbar ist.

9. Lastträger nach einem der Ansprüche 1 bis 8, dadurch gekennzeichnet, daß an mindestens einer Verbindungsstange (20) ein oberes und ein vertikal ausgefluchtetes unteres Rohrstück (46) angeschweißt ist und daß an mindestens einem Seitenholm (36) des Lastträgerrahmens (16) zwei entsprechende ausgefluchtete Rohrstücke (48) angeschweißt sind und daß jedes Rohrstück (46) der Verbindungsstange (20) ein Rohrstück (48) des Seitenholms (36) abstützt und die so gebildeten Rohrstückpaare (46, 48) je mittels eines Lagerbolzens (50) oder einer gemeinsamen durchgehenden Lagerstange miteinander verbunden sind.

10. Lastträger nach einem der Ansprüche 1 bis 9, dadurch gekennzeichnet, daß die Schwenkachse des Lastträgerrahmens (16) in geringem Abstand seitlich außerhalb der Seitenflächenebene des Fahrzeugs angeordnet oder die Schwenklageranordnung (52, 54) ein Doppelgelenk mit zwei parallelen schwenkachsen bildet, sodaß der Lastträgerrahmen (16) ggf. nach Einklappen eines Lastträgerbodens (42) um etwa 270° wenigstens angenähert an die Seitenwand des Fahrzeugs heranklappbar ist.

FIG.3

FIG.1

FIG.2

EP 0 451 691 A2